# EUROPEAN PATENT APPLICATION

(11) **EP 0 992 874 A1**
(43) Date of publication of application: **12.04.2000**
(21) Application number: 99117462.4
(22) Date of filing: 09.09.1999
(51) Int. Cl.: G06F 1/16, B60R 16/02

(54) **Interactive electronic terminal usable on board vehicles in movement**

(30) Priority: 08.10.1998 IT MI980653
(71) Applicant: LARIMART S.p.A., I-00168 Roma (IT)
(72) Inventor: Marini, Stefano, 00123 Roma (IT)
(74) Representative: Cioni, Carlo

(57) **Abstract**

Electronic terminal characterized by comprising two panels united by a hinge, one of which comprises a keyboard, preferably backlighted, while the other comprises a readout panel or "display"; by virtue of the reciprocal rotation of the two elements, the terminal being able to assume two operating positions, a first operating position corresponding to a reciprocal rotation of the planes of the two elements of less than 180° which permits the functioning of the terminal as a conventional "portable personal computer", data input by means of the keyboard, and a second position in which the element which contains the keyboard is rotated through 360°, i.e. the panel comprising the keyboard is adjacent the other element and can constitute a plane of support for it, the operation of the terminal is by means of the "function" keys located on the plane of the "display".

## Description

The present model of utility refers to an interactive electronic terminal that can be used with the maximum reliability and efficiency even on board of auto vehicles. The terminal according to the present model doesn't only assure communication services between a remote and a central station, but also permit the management of data received and the treatment of the information.

Its known that in some applications of data collection e.g. geographical data relating to phenomenona that occur in relatively vast regions , its necessary that the information be gathered in a short time and the operators are often forced to move on vehicles and to simultaneously insert the gathered data and elaborate the same data in programs ("software") installed on said terminals, that operate therefore like personal computers.

Systems are well known in the art that allow, using transceivers apparatus or other means of communication, of maintaining the connection between a peripheral terminal and a central server and to allow to the terminal to elaborate the gathered data before the same is dispatched to the central server, but it is known that insertion of the data using a keyboard is particularly uncomfortable and not at all reliable when the insertion must be done on a vehicle in movement in conditions of scarce stability and poor visibility: or when, for reasons of urgency or in cases of emergency, the insertion of the data must involve a reduced number of keystrokes.

The present model of electronic terminal allows the insertion of data even when the device is on board of vehicles that are subjects to bumps and to considerable oscillation in the horizontal plane.

The principal characteristic of the electronic terminal according to the present model is that it is constituted by two panels joined together by a hinge between them, one of which is keyboard of writing, that can be backlighted and the other the panel of reading or "display," the terminal being able to assume, by mutual rotation of the two elements, two different operational positions; a, first corresponding position to a rotation of the planes of the two elements to less than 180' allowing the terminal to function as a conventional portable "personal computer" ,the insertion of the data happening through the keyboard; and a second position in which the element that comprises the keyboard is rotated through 360° , i.e. the panel comprising the keyboard finishes up adjacent to the other element and can constitute the plane of support; the operation of the terminal is through the "function" keys disposed on the plane of the "display." The other elements of the terminal - such as the unit containing the central processor, the mass memory and the input/output devices - could be integrated into the panels described above or lodged separately in another center inside the vehicle.

Preferably the panel that contains the keyboard, after being rotated through 360° inserts itself into a dedicated seat on the rear of the other panel.

The external edges of the panel that contain the keyboard, could be at the same level or at a slightly higher level than the same keyboard so that, even in the position rotated of 360° when the panel containing the keyboard acts as support, the keys are not pressed.

Further, to eliminate any undesirable interference, the mutual rotation of of the panels through 360° could determine the deactivation of the keyboard.

Preferably the "function" keys disposed on the plane of the display are programmable to guarantee, from time to time, the functions required shown on the video.

The terminal according to the present model can also be used outside the vehicle either in the keyboard or in the "functional" key configuration.

The connection with the central server can be by means of a modem with communication by radio or telephone.

The terminal can be fitted onto a ledge in the vehicle or fixed in some other way in the cabin of the same vehicle.

The attached drawings illustrate the model by way of example and not of limitation:
Figure 1 shows a perspective view from the rear of the terminal in open position for operation by means of the keyboard.

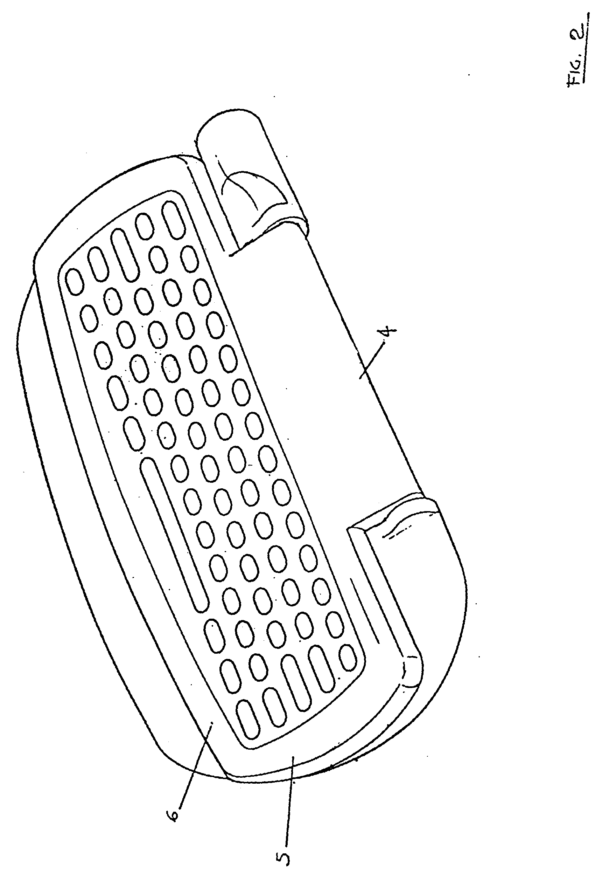

Figure. 2 shows a prospective view from the top of the part of the keyboard in closed position.

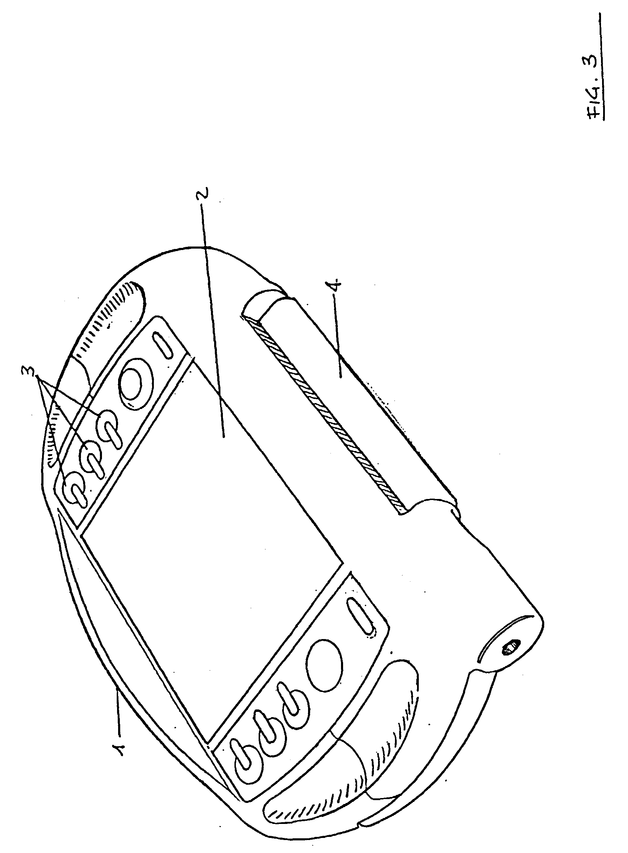

Figure 3 is a perspective view from the top of the display of the terminal in closed position.

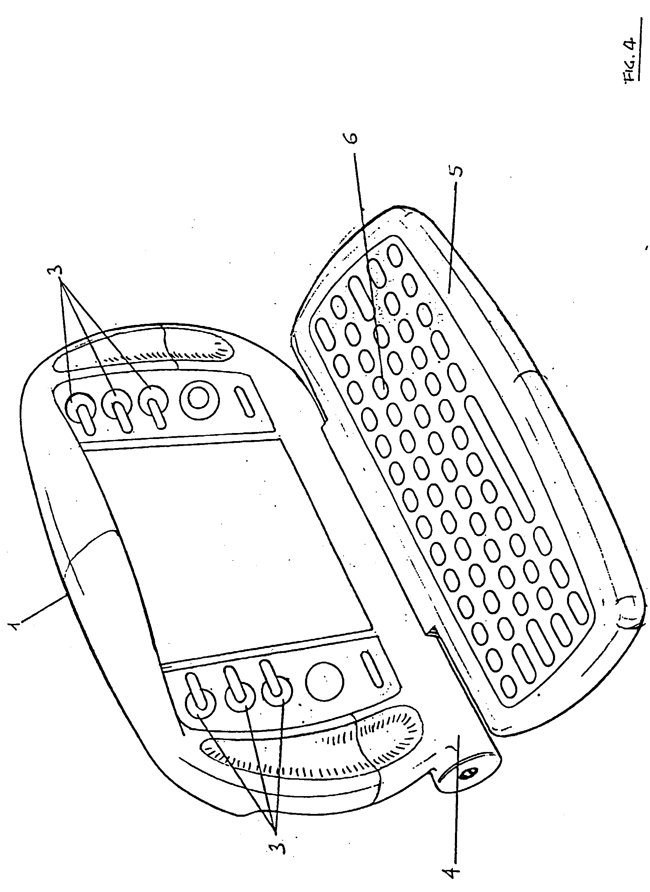

Figure 4 is a front prospective view of the terminal in open position for use by means of keyboard.

In the figures the same elements or analogous elements are identified by the same numerical elements.

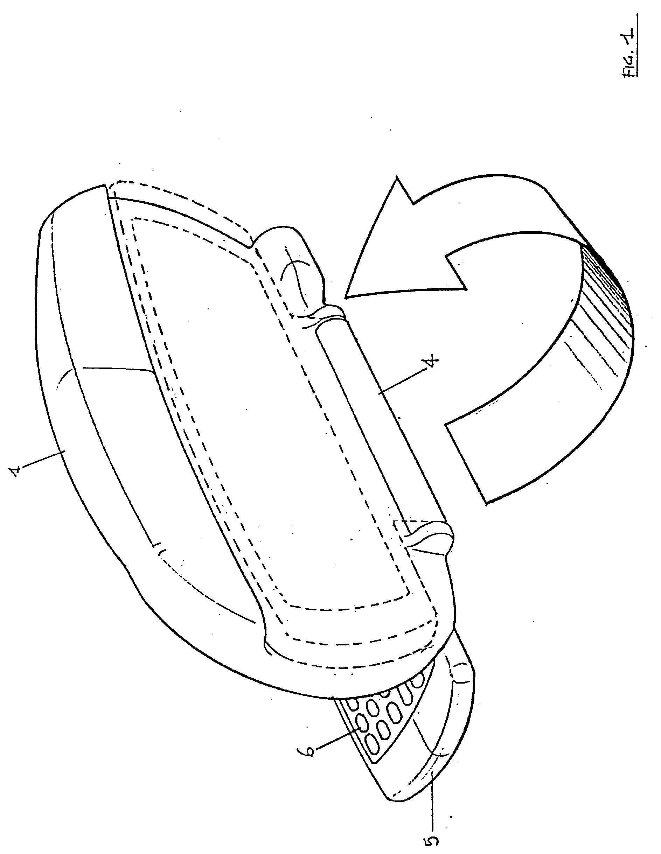

The figures show the panel 1 containing the display 2, around which are arranged the function keys 3. The panel 1 is connected in rotation by means of the hinge 4 with the panel 5 in which is set the keyboard 6. The panels 1 and 5 can rotate according to the arrow shown in the figure 1 until the panel 5 that comprises the keyboard 6 is brought to lodge in the dedicated seat in the back part of the panel.

To simplify both the description and the sketches, the conventional elements (such as the connections with the central processor unit when this is separate from the terminal, the devices for supplying electrical power, the devices of support or on-board installation) have been skipped in the description.

## Claims

1. Electronic terminal characterized by comprising two panels united by a hinge, one of which comprises a keyboard, preferably backlighted, while the other comprises a readout panel or "display"; by virtue of the reciprocal rotation of the two elements, the terminal being able to assume two operating positions, a first operating position corresponding to a reciprocal rotation of the planes of the two elements of less than 180° which permits the functioning of the terminal as a conventional "portable personal computer", data input by means of the keyboard, and a second position in which the element which contains the keyboard is rotated through 360°, i.e. the panel comprising the keyboard is adjacent the other element and can constitute a plane of support for it, the operation of the terminal is by means of the "function" keys located on the plane of the "display".

2. Electronic terminal according to claim 1, characterized by the other elements of the terminal, such as the joined central container, the processing base, the mass memories and the input/output devices being integrated into the panels.

3. Electronic terminal according to the claim 1, characterized by the other elements of the terminal, such as the joined central container, the processing base, the mass memories and the input/output devices, in the case of scarce availability of space being separately lodged in other centers inside the vehicle.

4. Electronic terminal according to the claims from 1 to- 3, characterized by the keyboard being disconnected in the passage from the keyboard operational position to that by means of functional keys.

5. Electronic terminal according to the preceding claims, characterized by the external edges of the panel that contains the keyboard could be at the same level or to a higher level than the same keyboard so that, also in the position rotated through 360° when the panel containing the keyboard acts as support, the keys are not pressed.

6. Electronic terminal according to the preceding claims, characterized by the panel that contains the keyboard, in succession to the rotation of 360°, inserting itself into a dedicated seat on the rear of the other panel.

7. Electronic terminal according to the preceding claims, characterized by the function keys being programmable.

8. Electronic terminal substantially as described and illustrated in the figures.
